Europäisches Patentamt

(19) European Patent Office

Office européen des brevets

(11) Publication number: **0 327 234 B1**

## (12) EUROPEAN PATENT SPECIFICATION

(45) Date of publication of patent specification :
**29.01.92 Bulletin 92/05**

(21) Application number : **89300617.1**

(22) Date of filing : **24.01.89**

(51) Int. Cl.⁵ : **C01B 25/46,** C22B 3/00

(54) Extraction of iron from phosphoric acid.

(30) Priority : **01.02.88 US 151216**

(43) Date of publication of application :
**09.08.89 Bulletin 89/32**

(45) Publication of the grant of the patent :
**29.01.92 Bulletin 92/05**

(84) Designated Contracting States :
**AT BE CH DE ES FR GB GR IT LI LU NL SE**

(56) References cited :
**EP-A- 0 090 119**
**EP-A- 0 132 906**
**DE-A- 3 002 830**
**FR-A- 2 351 055**
**US-A- 3 586 476**
**US-A- 3 586 477**
**US-A- 4 168 297**

(73) Proprietor : **IMC FERTILIZER, INC.**
**2315 Sanders Road**
**Northbrook, Illinois (US)**

(72) Inventor : **Baumann, Arthur N.**
**2329 Rogers Road**
**Lakeland Florida 33803 (US)**
Inventor : **Jardine, Kenneth J.**
**324 Eastway Drive**
**Lakeland Florida 33803 (US)**

(74) Representative : **Bannerman, David Gardner et al**
**Withers & Rogers 4 Dyer's Buildings Holborn**
**London, EC1N 2JT (GB)**

EP 0 327 234 B1

## Description

This invention relates to an improved process for removing iron from phosphoric acid, and particularly from wet process phosphoric acid.

Wet process phosphoric acid is generally made by acidulating phosphate rock with a strong mineral acid such as sulfuric acid. Phosphate rock is any ore that contains one or more phosphate minerals of sufficient purity and quantity to permit its commercial use as a source of phosphatic compounds or elemental phosphorous.

Phosphate rock is obtained from underground mining or surface mining of phosphate ore, the latter initially involving the use of large dragline excavators which remove the overburden and then recover the crude phosphate ore which is known as "matrix." The matrix is then washed by hydraulic jets in an improvised sump pit and the resulting mixture of phosphate ore, water, sand and gravel called the "slurry," is pumped by pipeline to a washing and beneficiation plant.

In the beneficiation plant, the phosphate ore is sized and concentrated, and slimes and sands are removed so that an original matrix, which could have a bone phosphate of lime or BPL content (tricalcium phosphate) in the range of about 20 to 30 percent may be upgraded to a phosphate rock having a higher BPL content, for example, in the range of 70 percent or higher. Even so, phosphoric acid formed by acidulation of phosphate rock unavoidably contains metal contaminants, such as aluminum, iron, magnesium and the like, witch both lower the grade of the acid product as well as increase the amount of solids formed during subsequent processing (e.g., concentrating) of the acid and on aging. Thus, there is a need for a method of producing concentrated phosphoric acid of improved purity which reduces the amount of solids produced.

According to this invention, there is provided a method for removing ferric iron from phosphoric acid comprising :

contacting an aqueous phase comprising phosphoric acid with an immiscible organic extractant consisting essentially of a mixture of mono(2-ethylhexyl) orthophosphoric acid and di(2-ethylhexyl) orthophosphoric acid having a weight ratio of greater than about 1 : 2, in an alphatic hydrocarbon diluent to extract ferric iron from the phosphoric acid ; and

separating the aqueous phase from the organic extractant to provide an aqueous phosphoric acid phase depleted of ferric iron and a pregnant organic extractant enriched with ferric iron.

The method may further comprise :

contacting the pregnant organic extractant with an aqueous phase comprising a stripping reagent selected from ascorbic acid, reagent grade phosphoric acid, oxalic acid, a mixture of sulfuric and hydrofluoric acids and ammonium bifluoride to cause the ferric iron to report to the aqueous phase ;

separating the organic extractant from the aqueous phase ;

and recycling the organic extractant to contact with an aqueous phase comprising phosphoric acid.

Alternatively, the method may further comprise :

contacting the pregant organic extractant with an aqueous phase containing ammonium bifluoride, to form $(NH_4)_3FeF_6$ as a precipitate ;

separating the organic extractant from the aqueous phase containing said precipitate ;

recycling said organic extractant to contact with an aqueous phase comprising phosphoric acid ;

removing the precipitated $(NH_4)FeF_6$ from the aqueous phase ; and

regenerating ammonium bifluoride for contacting with the iron enriched organic extractant by heating the precipitated $(NH_4)FeF_6$ in the presence of water vapor.

Depending on the complexing reagent used, iron may be recovered as iron oxide ($Fe_2O_3$), by heating the strip solution to decompose the complexing reagent.

The present invention thus provides a means of producing improved purity phosphoric acid from wet process phosphoric acid. It specifically provides a means of reducing the total amount of solids formed during the processing, e.g. concentration, of wet process acid as well as reducing the amount of phosphate lost in the solids.

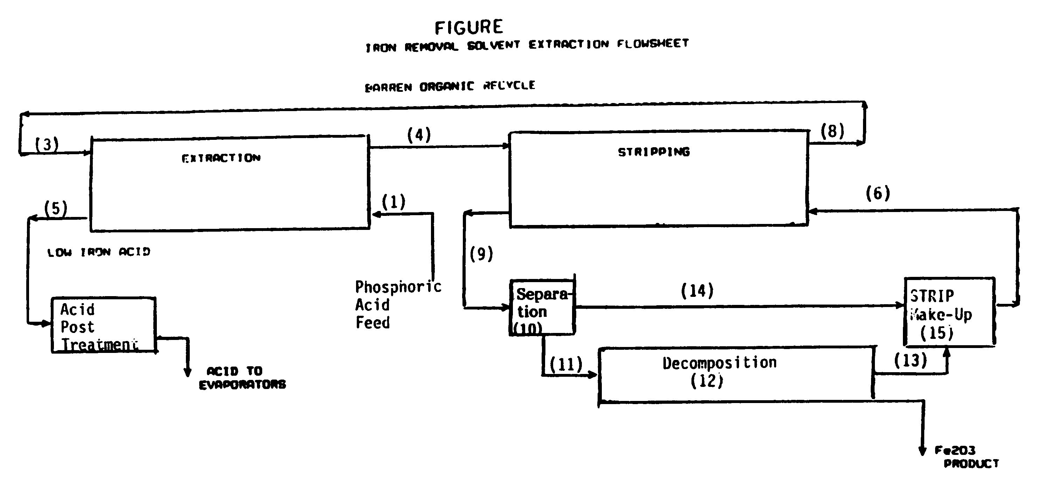

The attached Figure is a schematic flowsheet of a method of this invention, given by way of example only.

Wet process phosphoric acid is formed by acidulating phosphate rock with a strong mineral acid. Generally, wet process acid has a $P_2O_5$ concentration of about 27-30% and depending to some extent on the source of the phosphate rock, wet process acid will contain a variety of metal contaminants, including iron. These contaminants are thought to be primarily responsible for the formation of solid precipitates or sludge which accompany the production and processing of wet process acid. The present invention provides an improved solvent extraction process for removing iron contaminant from wet process phosphoric acid, thus ameliorating the solids problem.

The preferred embodiment of the process can be viewed as including three unit operations. In the first,

2

phosphoric acid is contacted with an immiscible organic extractant containing MEHPA and DEHPA. The second unit operation is the stripping process wherein the organic extractant is depleted of its iron values by contacting with an aqueous phase containing an iron complexing reagent, preferably ammonium bifluoride. The third unit operation is product recovery, wherein the aqueous phase used to strip the organic extractant is heated to decompose the complex iron salt formed.

DEHPA is widely used in extracting uranium from wet process phosphoric acid. It is also is known that DEHPA is capable of extracting other metallic cations, including iron, from acid solutions. The extraction coefficient (or distribution coefficient) of DEHPA for iron, however, is relatively low, being on the order of 0.1 or less for 30 percent phosphoric acid. The present invention is, in part, based on the determination that the DEHPA extraction coefficient for iron is greatly increased if DEHPA is admixed with MEHPA to form the organic extractant. In particular, it has been determined that the extraction coefficient for iron is dependent on the MEHPA concentration in the mixtures used to prepare the immiscible organic extractant. Iron is only extracted by this method when it is in the oxidized (ferric) form.

In accordance with the present invention, the immiscible organic extractant consists essentially of a mixture of MEHPA and DEHPA in an aliphatic hydrocarbon diluent. The DEHPA : MEHPA weight ratio is less than about 2 : 1 and preferably is as close as possible to 1 : 1. The MEHPA concentration is desirably between about 0.4 and 0.8 M. The aliphatic hydrocarbon diluent will typically have from about an eight to about a fourteen carbon chain-length. Suitable hydrocarbon diluents are well known in the art and include kerosene as well as other petroleum products.

Because the organic extractant has a finite saturation point for iron, it is both desirable and economical to strip iron from the organic extractant periodically. In this way, the organic extractant can be reused to remove iron from additional phosphoric acid. Suitable stripping reagents should be immiscible with the organic extractant and should be capable of complexing with the iron in the organic phase. For example, with aqueous stripping reagents the iron complex reports to the aqueous phase.

Reagents which can be used with the present invention include ascorbic acid, reagent grade phosphoric acid, oxalic acid, ammonium bifloride and a mixture of sulfuric acid and hydrofluoric acid. Applicants have found that each of these reagents causes substantial removal of iron from the organic phase. Use of oxalic acid, which is a reductive stripping agent, allows high iron loadings in the aqueous phase, and makes possible electrolytic iron removal from the aqueous stripping phase. Use of a mixture of hydrofluoric and sulfuric acids, although relatively inexpensive, requires care in disposal and handling.

One stripping reagent for removing iron from the organic extractant is ammonium bifluoride. The necessary concentration of ammonium bifluoride in the aqueous solution and/or the contacting ratio of aqueous to organic phases will vary with the amount of iron which is present in the wet process acid to be extracted ; more ammonium bifluoride being necessary to extract more iron. Generally, solutions containing between about 10 and about 30% by weight of ammonium biflouride are wed. Typically about 20% solutions are suitable.

When the iron stripped from the organic phase contacts ammonium bifluoride in the aqueous phase, a solid precipitate ($(NH_4)_3FeF_6$) is formed. The solid precipitate can be removed from the aqueous phase by filtration or settling or any other means known in the art for separating solid particulate matter from aqueous solutions. The precipitated salt can then be heated to decompose the salt, yielding iron oxide and the original ammonium bifluoride. The ammonium bifluoride, for example, can then be recycled as an aqueous solution to strip more iron from the pregnant (iron enriched) organic extractant. Thus, although ammonium bifluoride is a costly reagent, its recycling offsets any cost disadvantage.

As mentioned above, when using ammonium bifluoride as the stripping reagent, removal of iron from the stripping reagent complex can be accomplished by means of thermal decomposition. The iron ammonium fluoride precipitate can be heated in the presence of water to yield iron oxide and ammonium bifluoride. The heating may be accomplished in, for example, a high temperature drier or a calciner. Temperatures of about 260°C (500°F) and pressures of 1 atm. for about 2 hours are sufficient. Other suitable conditions can readily be determined by those skilled in the art by routine testing. Ammonium bifluoride released from the calciner is absorbed in an aqueous stream from the filter and recycled.

A typical example of an integrated scheme demonstrating the present invention is shown schematically in the sole Figure. Wet process phosphoric acid, which may for example comprise acid raffinate discharged from a uranium recovery operation (see U.S. 4,302,427) is fed through line 1 to extraction zone 2 where it is intimately mixed with an immiscible organic extractant fed into extraction zone 2 through line 3. (Other sources of phosphoric acid of similar concentration may be used.) After contacting, the phases are separated and removed from zone 2. The aqueous phase comprising an iron-depleted phosphoric acid product stream is removed through line 5. The organic phase being enriched in iron is fed through line 4 to stripping zone 7 where ammonium bifluoride introduced through line 6 is contacted with the iron enriched organic phase to strip iron from it. After contacting, the aqueous and organic phases are removed separately from zone 7. A regenerated organic extractant is removed through line 8 and is recycled to zone 2 through line 3. The aqueous phase containing solid $(NH_4)_3FeF_6$, is passed through line 9 to separation zone 10, and decomposition zone 12. In separation zone 10 solid $(NR_4)_3FeF_6$ is separated from the aqueous phase which can be passed through line 14 for make-up of the aqueous ammonium bifluoride for recycle. The recovered $(NH_4)_3FeF_6$ is fed through line 11 into decomposition zone 12 where it is heated in the presence of water vapor, introduced for example through line 11 with the wet filter cake, to decompose it to iron oxide and regenerated ammonium bifluoride. The regenerated ammonium bifluoride removed through line 13 is recycled to the ammonium bifluoride make-up zone 15, where it is dissolved in the aqueous stream from line 14, and then recycled to the stripping zone 7 via line 6.

The above scheme is operated with two recycle loops. The stripped, iron-depleted organic extractant is recycled for contacting wet process phosphoric acid, and the ammonium bifluoride decomposition product is recycled for contacting iron enriched organic extractant. Recycling greatly reduces the expense associated with bulk use of these costly reagents. Means for accomplishing extraction, stripping, filtration and thermal decomposition are well known in the art. Standard equipment may be employed.

The following examples are not intended to limit the invention, but are given as illustrative examples only.

## Example 1

In this example, the iron extraction coefficient for organic phases, having various ratios of DEHPA to MEHPA was determined. Each organic phase had a total organic concentration (DEHPA plus MEPHA) of 1.5 M. The source of phosphoric acid was a uranium plant raffinate acid. This is the phosphoric acid from which uranium has been extracted by a solvent extraction process (see U.S. 4,302,427). Extraction coefficients are shown in Table 1. The extraction coefficient was found to be approximately dependent upon the ratio of MEHPA to DEHPA in the organic phase.

### TABLE 1

#### DEPENDENCE OF IRON EXTRACTION COEFFICIENT ON "MEHPA" CONCENTRATION

| NOTES | EXTRACTANT | % DEHPA* | % MEHPA* | EXTRACTION COEFFICIENT |
|-------|------------|----------|----------|------------------------|
| (1) | U.R. PLANT ORGANIC | 96.0 | 2.0 | 0.053 |
| (2) | MIXED U.R./MOBIL | 75.5 | 21.1 | 0.351 |
| (3) | MOBIL 2EHAP | 55.1 | 40.1 | 0.675 |
| (4) | HODAG OAP | 48.2 | 47.2 | 0.822 |
| (5) | HODAG DEHP | 47.6 | 44.9 | 1.820 |
| (6) | HODAG DEHP | 47.6 | 44.9 | 2.050 |

Notes: Examples (1) and (2) are outside the scope of this invention.

\* Concentrations of DEHPA and MEHPA are for the initial reagent. All reagents were diluted to a concentration of 1.5 M, based on the average molecular weight, before use.

(1) Uranium Plant organic, also containing about 6% TOPO
(2) 50:50 volumetric mixture of U.R. plant organic and Mobil 2EHAP.
(3) Mobil 2-ethylhexyl acid phosphate (a mixture of MEHPA and DEHPA)
(4) Hodag equivalent of Mobile 2-ethylhexyl acid phosphate
(5) Hodag material, erroneously sold as DEHPA
(6) Recheck of previous shakeout

Example 2

The effect of the iron oxidation state in the phosphoric acid on the iron extraction coefficient was examined by pretreating the feed acid with either an oxidizing or a reducing agent. As can be seen in Table 2 below, reduction of the iron rendered it unavailable for extraction by the organic phase. The organic extractant was Mobil 2-ethylhexyl acid phosphate.

## TABLE 2

### THE EFFECT OF THE OXIDATION STATE OF IRON ON IRON EXTRACTION

| FEED ACID PRETREATMENT: | OXIDIZED | REDUCED |
|---|---|---|
| FEED ACID VOLUME (ml) | 150 | 150 |
| FEED ACID SP. GR. | 1.32 | 1.32 |
| FEED ACID CONCENTRATION %$Fe_2O_3$ | 1.31 | 1.88 |
| ANHYDROUS $P_2O_5$ | 60.51 | 60.10 |
| BARREN ORGANIC VOLUME (ml) | 100 | 100 |
| BARREN ORGANIC SP. GR. | .8738 | .8738 |
| LOADED ORGANIC %$Fe_2O_3$ | .88 | .11 |
| RAFFINATE ACID SP. GR. | 1.3152 | 1.3243 |
| %$Fe_2O_3$ | 0.86 | 1.83 |
| ANHYDROUS $P_2O_5$ | 61.88 | 60.28 |
| Fe EXTRACTION COEFFICIENT | 1.02 | .06 |

Example 3

Various reagents were tested for their efficacy as agents for stripping iron from the organic phase. Results are shown below in Table 3.

The test procedure consisted of making up aqueous solutions, at several concentrations, of the various reagents, mixing these solutions with a sample of the iron enriched organic extractant, separating the aqueous and organic phases, and analyzing the aqueous phase, and any precipitates, for total iron.

## TABLE 3

### STRIPPING RESULTS

| Aqueous Phase | g/l Fe in Aqueous Phase After Mixing |
|---|---|
| 10% L-Ascorbic Acid | 2.54 g/l |
| 30% R.G. Phos Acid | 5.67 g/l |
| 7.5% Oxalic Acid | 3.90 g/l |
| 20% $H_2SO_4$/7.5% HF | 3.53 g/l |
| 20% $NH_4HF_2$ solution | 1.48 g/l |
| | + 9.7 gms precipitate @ 20.1% Fe |

Example 4

A test was conducted to quantity the effects of iron removal from wet process acid when the acid subsequently is evaporated first to 40 percent and then to 54 percent $P_2O_5$ and aged in a manner similar to conventional preparation of Merchant Grade Acid. The results of the evaporation and aging portion of this test are shown below in Table 4.

## TABLE 4

| | Treated Low Iron Acid | Untreated Run-of-Plant Acid |
|---|---|---|
| Weight 30% $P_2O_5$ Acid Feed | 17164 | 17156 |
| Weight 40% $P_2O_5$ Clarified Acid | 10186 | 9470 |
| Weight 40% $P_2O_5$ Acid Solids | 92.40 | 153.1 |
| Percentage of $P_2O_5$ Lost with Solids at 40% Level | 0.07 | 0.54 |
| Weight 54% $P_2O_5$ Clarified Acid | 5292.0 | 5280.0 |
| Weight 54% $P_2O_5$ Acid Solids | 288.6 | 424.6 |
| Percentage of $P_2O_5$ Lost with Solids at 54% Level | 3.78 | 6.48 |

All weights are in grams

Note: The differences between the total quantities of $P_2O_5$ in the 30% feed and the 40% products (acid plus solids), and the 40% products and 54% products are due to samples removed for chemical analyses.

In terms of 40 percent $P_2O_5$ acid solids, it can be seen that the low iron acid produced about a 40 percent reduction. More importantly, the total quantity of $P_2O_5$ lost with the solids was reduced by 87 percent, compared to the solids from the untreated acid.

At the 54 percent $P_2O_5$ concentration, the low iron acid also produced less solids (about a 32 percent reduction), with a reduction in the $P_2O_5$ lost with the solids of 41%.

**Claims**

1. A method for removing ferric iron from phosphoric acid comprising :
contacting an aqueous phase comprising phosphoric acid with an immiscible organic extractant consisting essentially of a mixture of mono(2-ethylhexyl) orthophosphoric acid and di(2-ethylhexyl) orthophosphoric acid having a weight ratio of greater than about 1 : 2, in an alophatic hydrocarbon diluent to extract ferric iron from the phosphoric acid ; and
separating the aqueous phase from the organic extractant to provide an aqueous phosphoric acid phase depleted of ferric iron and a pregnant organic extractant enriched with ferric iron.

2. A method according to Claim 1, further comprising :
contacting the pregant organic extractant with an aqueous phase comprising a stripping reagent selected from ascorbic acid, reagent grade phosphoric acid, oxalic acid, a mixture of sulfuric and hydrofluoric acids and ammonium bifluoride to cause the ferric iron to report to the aqueous phase ;
separating the organic extractant from the aqueous phase ;
and recycling the organic extractant to contact with an aqueous phase comprising phosphoric acid.

3. A method according to Claim 1, further comprising :
contacting the pregnant organic extractant with an aqueous phase containing ammonium bifluoride, to form $(NH_4)_3FeF_6$ as a precipitate ;
separating the organic extractant from the aqueous phase containing said precipitate ;
recycling said organic extractant to contact with an aqueous phase comprising phosphoric acid ;
removing the precipitated $(NH_4)_3FeF_6$ from the aqueous phase ; and
regenerating ammonium bifluoride for contacting with the iron enriched organic extractant by heating the precipitated $(NH_4)_3FeF_6$ in the presence of water vapor.

4. The method of any preceding claim wherein the concentration of mono-(2-ethylhexyl) orthophosphoric acid is between about 0.4 M and 0.8 M.

**Patentansprüche**

1. Verfahren zur Entfernung von dreiwertigem Eisen aus Phosphorsäure, das folgende Stufen umfaßt :
Kontaktierung einer Phosphorsäure enthaltenden wässerigen Phase mit einem nichtmischbaren organischen Extraktionsmittel, das im wesentlichen aus einem Gemisch aus Mono(2-ethylhexyl)-orthophosphorsäure und Di(2-ethylhexyl)-orthophosphorsäure mit einem Gewichtsverhältnis von über ca. 1 : 2 besteht, in einem aliphatischen Kohlenwasserstoff als Verdünnungsmittel zur Extraktion des dreiwerigen Eisens aus der Phosphorsäure und
Abtrennung der wässerigen Phase aus dem organischen Extraktionsmittel zur Gewinnung einer an dreiwertigem Eisen verarmten wässerigen Phosphorsäurephase und eines mit dreiwertigem Eisen angereicherten organischen Extraktionsmittels.

2. Verfahren nach Anspruch 1, das ferner folgende Stufen umfaßt :
Kontaktierung des angereicherten organischen Extraktionsmittels mit einer wässerigen Phase, die ein Abziehmittel enthält, ausgewählt aus Ascorbinsäure, Phosphorsäure mit Reagenzqualität, Oxalsäure, einem Gemisch aus Schwefel- und Fluorwasserstoffsäure und Ammoniumhydrogenfluorid, um das dreiwertige Eisen in die wässerige Phase zu transferieren ;
Abtrennung des organischen Extraktionsmittels von der wässerigen Phase und
Rückführung des organischen Extraktionsmittels zur Kontaktierung mit einer Phosphorsäure enthaltenden wässerigen Phase.

3. Verfahren nach Anspruch 1, das ferner folgende Stufen enthält :
Kontaktierung des angereicherten organischen Extraktionsmittels mit einer wässerigen Phase, die Ammoniumhydrogenfluorid enthält, zur Bildung von $(NH_4)_3FeF_6$ in Form eines Niederschlags ;
Abtrennung des organischen Extraktionsmittels von der wässerigen Phase, die diesen Niederschlag enthält

Rückführung des organischen Extraktionsmittels zur Kontaktierung mit einer Phosphorsäure enthaltenden wässerigen Phase ;

Abtrennung des ausgefällten Niederschlags $(NH_4)_3FeF_6$ aus der wässerigen Phase und

Regeneration des Ammoniumhydrofluorids zur Kontaktierung mit dem mit Eisen angereicherten organischen Extraktionsmittel durch Erwärmen des ausgefällten $(NH_4)_3FeF_6$ in Anwesenheit von Wasserdampf.

4. Verfahren nach einem der vorangegangenen Ansprüche, wobei die Konzentration von Mono-(2-ethylhexyl)-orthophosphorsäure zwischen ca. 0,4 M und 0,8 M liegt.

## Revendications

1. Procédé pour éliminer du fer à l'état ferrique à partir d'un acide phosphorique comportant le fait de :
— mettre en contact une phase aqueuse comprenant l'acide phosphorique avec un produit organique d'extraction non miscible qui consiste essentiellement en un mélange d'acide mono(éthyl-2-hexyl) orthophosphorique et d'acide di (éthyl-2-héxyl) orthophosphorique ayant un rapport de poids qui est supérieur à environ 1 : 2, dans un diluant d'hydrocarbure aliphatique pour extraire le fer à l'état ferrique de l'acide phosphorique ; et
— séparer la phase aqueuse du produit d'extraction pour fournir une phase acide phosphorique aqueuse appauvrie en fer à l'état ferrique et un produit d'extraction organique naissant enrichi en fer à l'état ferrique.

2. Procédé selon la revendication 1 comprenant en outre le fait de :
— mettre en contact le produit d'extraction organique à l'état naissant avec une phase aqueuse comportant un réactif d'élimination par entraînement choisi parmi l'acide ascorbique, un réactif phosphorique de qualité réactive, un acide oxalique, un mélange d'acides sulfurique et fluorhydrique et de difluorure d'ammonium pour provoquer le passage du fer à l'état ferrique vers la phase gazeuse ;
— à séparer le produit d'extraction organique à partir de la phase aqueuse ;
— et à recycler le produit d'extraction organique de façon à ce qu'il vienne en contact avec la phase aqueuse comportant l'acide phosphorique.

3. Procédé selon la revendication 1 comportant en outre le fait de :
— mettre en contact le produit d'extraction organique naissant avec une phase aqueuse contenant du difluorure d'ammonium pour former $(NH_4)_3FeF_6$ en tant que précipité ;
— séparer le produit d'extraction organique de la phase aqueuse contenant ledit précipité ;
— recycler ledit produit d'extraction organique pour qu'il vienne en contact avec une phase aqueuse comportant l'acide phosphorique ;
— éliminer le $(NH_4)_3FeF_6$ précipité et à partir de la phase gazeuse ; et
— régénérer ledit fluorure d'ammonium pour qu'il vienne en contact avec le produit d'extraction organique enrichi en fer par chauffage du $(NH_4)_3FeF_6$ précipité en présence de vapeur d'eau.

4. Procédé selon l'une quelconque des revendications précédentes dans lequel la concentration en acide mono-(éthyl-2-héxyl) orthophosphorique est comprise entre 0,4 M et 0,8 M.

FIGURE

IRON REMOVAL SOLVENT EXTRACTION FLOWSHEET